(19) Europäisches Patentamt
European Patent Office
Office européen des brevets

(11) Veröffentlichungsnummer: **0 032 664**
**B1**

# (12) EUROPÄISCHE PATENTSCHRIFT

(45) Veröffentlichungstag der Patentschrift: **13.04.83**

(51) Int. Cl.³: **C 04 B 31/42,** C 04 B 41/04

(21) Anmeldenummer: **81100041.3**

(22) Anmeldetag: **07.01.81**

## (54) Hydrophobiermittel für geblähte Mineralien.

(30) Priorität: **19.01.80 DE 3001893**

(43) Veröffentlichungstag der Anmeldung: **29.07.81 Patentblatt 81/30**

(45) Bekanntmachung des Hinweises auf die Patenterteilung: **13.04.83 Patentblatt 83/15**

(84) Benannte Vertragsstaaten: **BE DE FR GB NL SE**

(56) Entgegenhaltungen:
**CH-A-520 084**
**DE-A-2 813 941**
**DE-B-2 700 890**
**US-A-2 977 245**
**Römpps Chemie-Lexikon, 7. Auflage, 1973, Stichwort »Fettamin«**

(73) Patentinhaber: **HOECHST AKTIENGESELLSCHAFT, Postfach 80 03 20, D-6230 Frankfurt/Main 80 (DE)**

(72) Erfinder: **May, Adolf, Dr., Dahlienweg 5, D-6238 Hofheim am Taunus (DE)**
Erfinder: **Voetz, Franz-Josef, Weilstrasse 26, D-6277 Camberg/Taunus (DE)**
Erfinder: **Gerl, August, Kallestrasse 5, D-6000 Frankfurt am Main (DE)**

EP 0 032 664 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Hydrophobiermittel für geblähte Mineralien

Geblähte Tonmineralien wie Perlit und Vermiculit werden seit Jahren als Dämmaterial in der Baustoffindustrie eingesetzt. Es ist bekannt, daß diese Mineralien Wasser anziehen und deshalb über einen längeren Zeitraum hinweg an Wirksamkeit verlieren. Es wurde nun gefunden, daß solche geblähten Mineralien wesentlich weniger Wasser aufnehmen, wenn sie mit einem Hydrophobiermittel, wie im folgenden beschrieben, behandelt werden.

Aus CH-A-520 084 sind bereits Umsetzungsprodukte aus Fettaminen und Kohlensäure bekannt. Sie dienen zur Verbesserung der Haftfestigkeit des Bitumens an das Gesteinsmaterial im Straßenbau. Verfahren zur Hydrophobierung von anorganischem Material sind aus DE-A-2 813 941 und DE-B-2 700 890 bekannt. So beschreibt die DE-A-2 813 941 die Hydrophobierung von Vermiculit mit Hilfe von niederen Alkylaminen, vorzugsweise mit Ammoniak. Die DE-B-2 700 890 beschäftigt sich mit der Hydrophobierung von Kalk mit Hilfe von Triäthanolaminstearat oder Ammoniumstearat.

Gegenstand der Erfindung ist ein Hydrophobiermittel für geblähte Mineralien, bestehend aus

a) einem Fettamin der Formel

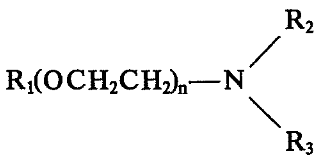

wobei $R_1$ Alkyl oder Alkenyl mit jeweils 8–22, vorzugsweise 14–22 C-Atomen, oder $C_8-C_{22}$-Alkylphenyl, $R_2$ und $R_3$ Wasserstoff, $C_1-C_4$-Alkyl oder -Alkenyl, Phenyl oder Benzyl und n eine Zahl von 0 bis 4 bedeuten,

b) einer Fettsäure oder einem Fettsäureester der Formel

$R_5CO(OCH_2CH_2)_mOH$

oder einem Fettalkohol der Formel

$R_6(OCH_2CH_2)_mOH$

wobei $R_5$ Alkyl oder Alkenyl mit jeweils 8–22, vorzugsweise 14–22 C-Atomen, $R_6$ Alkyl oder Alkenyl mit jeweils 9–23, vorzugsweise 15–23 C-Atomen, und m eine Zahl von 0 bis 2 bedeuten, sowie

c) einer niedermolekularen Säure.

Als Fettsäuren b) kommen vor allem die gesättigten und ungesättigten Fettsäuren sowie deren Mischungen in Frage, wie sie bei der Verseifung von natürlichen Fetten erhalten werden, wie beispielsweise Talgfettsäure, Cocosfettsäure, Stearinsäure, Ölsäure und Palmitinsäure. Entsprechendes gilt für die Fettalkohole unter b) und die Fettamine a). Bei den niedermolekularen Säuren c) handelt es sich im wesentlichen um $C_1-C_4$-Carbonsäuren wie Ameisensäure oder Essigsäure, Dicarbonsäuren wie Oxalsäure oder Malonsäure, Hydroxycarbonsäuren wie Milchsäure und einwertige anorganische Säuren wie Salzsäure oder Salpetersäure aber auch Amidosulfonsäure. Das molare Mischungsverhältnis der einzelnen Komponenten a), b) und c) kann in weiten Grenzen schwanken und beträgt von 10 : 1 : 1 über 1 : 1 : 10 bis zu 1 : 10 : 1.

Die Herstellung des erfindungsgemäßen Hydrophobiermittels erfolgt durch einfaches Zusammenschmelzen der Komponenten bei Temperaturen von ca. 30 bis 65°C. Im allgemeinen gibt man noch Wasser und/oder niedere Alkohole hinzu, um gut zu handhabende Pasten oder Flüssigkeiten mit einem Feststoffgehalt von ca. 10 bis 60 Gew.-% zu erhalten. Für den Gebrauch werden diese konzentrierten Pasten oder Flüssigkeiten weiter mit Wasser oder Alkohol verdünnt auf einen Gehalt von ca. 1 bis 10 Gew.-%. Mit diesen verdünnten Lösungen werden dann die geblähten Tonmineralien nach Verlassen des Blähofens im heißen Zustand besprüht oder in einem Mischwerk besprüht und anschließend getrocknet. Die Anwendungskonzentration des Hydrophobiermittels bezogen auf die geblähten Tonmineralien beträgt 0,1 bis 3 Gew.-%.

Im folgenden sind einige erfindungsgemäße Hydrophobiermittel beschrieben, die alle durch gemeinsames Aufschmelzen der Einzelkomponenten hergestellt werden. Die Produkte 9 und 10 wurden zum Vergleich herangezogen.

| | | | Smp. | Durchlaufende Wassermenge bei % Hydrophobiermittel | |
|---|---|---|---|---|---|
| 1. | 29,9% | Stearylamin | 55–56°C | 0,56% | 200 ml |
| | 16,7% | Talgfettsäure | | 1,52% | 224 ml |
| | 3,4% | Essigsäure | | | |
| | 20% | Isopropanol | | | |
| | 30% | E-Wasser | | | |
| 2. | 45% | Stearylamin | 44–46°C | 0,53% | 220 ml |
| | 2,5% | Ameisensäure | | 1,51% | 226 ml |
| | 2,5% | Stearinsäure | | | |
| | 20% | Isopropanol | | | |
| | 30% | Wasser | | | |
| 3. | 25,0% | Cocosamin | 34–38°C | 0,54% | 184 ml |
| | 6,0% | Milchsäure | | 0,98% | 193 ml |
| | 19,0% | Stearinsäure | | | |
| | 20% | Isopropanol | | | |
| | 30% | Wasser | | | |
| 4. | 35% | Talgfettamin | 28–31°C | 0,54% | 192 ml |
| | 7,5% | Ameisensäure | | 1,01% | 210 ml |
| | 7,5% | Stearylalkohol | | | |
| | 20% | Isopropanol | | | |
| | 30% | Wasser | | | |
| 5. | 30% | Behenfettamin | 35–38°C | 0,53% | 195 ml |
| | 10% | Essigsäure | | 1,01% | 209 ml |
| | 10% | Cocosfettsäure | | | |
| | 20% | Isopropanol | | | |
| | 30% | Wasser | | | |

Fortsetzung

| | | | Smp. | Durchlaufende Wassermenge bei % Hydrophobiermittel | |
|---|---|---|---|---|---|
| 6. | 40% | Di-ethoxystearylamin | 34–36°C | 0,55% | 168 ml |
| | 5% | Ameisensäure | | 1,00% | 188 ml |
| | 5% | Stearinsäure | | | |
| | 20% | Isopropanol | | | |
| | 30% | Wasser | | | |
| 7. | 44% | Laurylacryletheramin | | 0,53% | 192 ml |
| | 3% | Salzsäure | | 0,96% | 205 ml |
| | 3% | Stearylalkohol bei RT flüssig | | | |
| | 20% | Isopropanol | | | |
| | 30% | Wasser | | | |
| 8. | 31% | Dimethylstearylamin | 39–41°C | 0,56% | 162 ml |
| | 6% | Essigsäure | | 1,49% | 196 ml |
| | 13% | Stearinsäure | | | |
| | 20% | Isopropanol | | | |
| | 30% | Wasser | | | |
| 9. | Ammoniumsalz der Stearinsäure | | | 0,5% | 144 ml |
| | | | | 1,5% | 152 ml |
| 10. | Alkali Silikonat | | | 0,42% | 140 ml |
| | | | | 0,98% | 196 ml |

Aus den genannten Hydrophobiermitteln wurden 10%ige wäßrige Lösungen bzw. Dispersionen hergestellt, die mit einer Druckpistole auf Vermiculit aufgebracht wurden. Das so behandelte Vermiculit wurde dann bis zur Gewichtskonstanz getrocknet. Die Werte für die jeweils aufgebrachten Mengen an Hydrophobiermitteln sind bei den jeweiligen Beispielen angegeben.

Proben des so behandelten Vermiculit wurden in einen 400 ml Meßzylinder mit unterem Auslauf gefüllt und mit 250 ml enthärtetem Wasser übergossen. Gemessen wurde die noch durchlaufende Menge an Wasser. Die jeweiligen Meßwerte sind in den Beispielen angegeben. Im Fall des unbehandelten Vermiculit laufen 140 ml Wasser durch. Die Beispiele zeigen, daß das mit dem erfindungsgemäßen Mittel behandelte Vermiculit eine wesentlich größere Menge Wasser durchläßt und damit eine bessere hydrophobe Wirkung hat als die Vergleichsprodukte 9 und 10.

**Patentanspruch**

Hydrophobiermittel für geblähte Mineralien bestehend aus

a) einem Fettamin der Formel

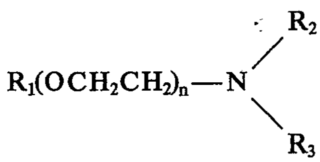

wobei $R_1$ Alkyl oder Alkenyl mit jeweils 8–22, vorzugsweise 14–22 C-Atomen, oder $C_8-C_{22}$-Alkylphenyl, $R_2$ und $R_3$ Wasserstoff, $C_1-C_4$-Alkyl oder -Alkenyl, Phenyl oder Benzyl und n eine Zahl von 0 bis 4 bedeuten,

b) einer Fettsäure oder einem Fettsäureester der Formel

$R_5CO(OCH_2CH_2)_mOH$

oder einem Fettalkohol der Formel

$R_6(OCH_2CH_2)_mOH$

wobei $R_5$ Alkyl oder Alkenyl mit jeweils 8–22, vorzugsweise 14–22 C-Atomen, $R_6$ Alkyl oder Alkenyl mit jeweils 9–23, vorzugsweise 15–23 C-Atomen, und m eine Zahl von 0 bis 2 bedeuten, sowie

c) einer niedermolekularen Säure.

**Claim**

Hydrophobizing composition for expanded minerals consisting of

a) a fatty amine of the formula

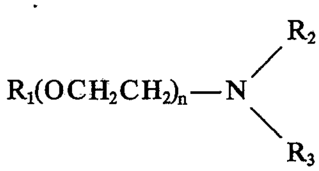

in which $R_1$ is $C_8-C_{22}$-alkyl, preferably $C_{14}-C_{22}$-alkyl, $C_{14}-C_{22}$-alkenyl or $C_8-C_{22}$-alkylphenyl, $R_2$ and $R^3$ each are hydrogen, $C_1-C_4$-alkyl or $C_1-C_4$-alkenyl, phenyl or benzyl, and n is a number of from 0 to 4;

b) a fatty acid or a fatty acid ester of the formula

$R_5CO(OCH_2CH_2)_mOH$

or a fatty alcohol of the formula

$R_6(OCH_2CH_2)_mOH$

in which $R_5$ is $C_8-C_{22}$-alkyl, preferably $C_{14}-C_{22}$-alkyl or -alkenyl, $R_6$ ist $C_9-C_{23}$-alkyl, preferably $C_{15}-C_{23}$-alkyl or -alkenyl, and m is a number of from 0 to 2; and

c) a low molecular weight acid.

**Revendication**

Agent hydrofugeant pour matières minérales expansées, agent caractérisé en ce qu'il est constitué:

a) d'une amine grasse répondant à la formule:

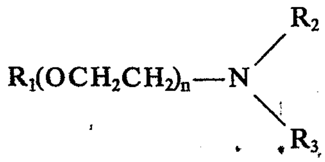

dans laquelle $R_1$ représente un radical alkyle ou un radical alcényle contenant chacun de 8 à 22 atomes de carbone, de préférence de 14 à 22, ou un radical alkylphényle à alkyle en $C_8-C_{22}$, $R_2$ et $R_3$ représentent chacun l'hydrogéne, un alkyle en $C_1-C_4$, un alcényle en $C_1-C_4$, un phényle ou un benzyle et n désigne un nombre de 0 à 4,

b) d'un acide gras ou d'un ester d'acide gras répondant à la formule:

$R_5CO(OCH_2CH_2)_mOH$

ou d'un alcool gras répondant à la formule:

$R_6(OCH_2CH_2)_mOH$

formules dans lesquelles $R_5$ représente un alkyle ou un alcényle contenant chacun de 8 à 22 atomes de carbone, de préférence de 14 à 22, $R_6$ représente un alkyle ou un alcényle contenant chacun de 9 à 23 atomes de carbone, de préférence de 15 à 23, et m représente un nombre de 0 à 2, ainsi que

c) d'un acide gras à bas poids moléculaire.